Europäisches Patentamt

**European Patent Office**

Office européen des brevets

(11) veröffentlichungsnummer: **0 016 447**

**A1**

(12) **EUROPÄISCHE PATENTANMELDUNG**

(21) Anmeldenummer: **80101373.1**

(22) Anmeldetag: **17.03.80**

(51) Int. Cl.³: **G 11 B 5/84**
**B 24 B 1/00**

(30) Priorität: **20.03.79 DE 2901807**

(43) Veröffentlichungstag der Anmeldung:
**01.10.80 Patentblatt 80/20**

(84) Benannte Vertragsstaaten:
**AT BE CH DE FR GB IT LU NL SE**

(71) Anmelder: **BASF Aktiengesellschaft**
**Carl-Bosch-Strasse 38**
**D-6700 Ludwigshafen(DE)**

(72) Erfinder: **Deimling, Karl**
**Vogesenstrasse 12**
**D-7601 Willstaett(DE)**

(72) Erfinder: **Falk, Roland**
**Hohbuehl 51**
**D-7590 Achern(DE)**

(72) Erfinder: **Krug, Aribert**
**Pfarrmatt 10**
**D-7590 Achern-Fautenbach(DE)**

(72) Erfinder: **Nagel, Peter, Dipl.-Ing.**
**Uhlandstrasse 5**
**D-7601 Willstaett(DE)**

(72) Erfinder: **Sand, Rudolf**
**Anton-Bruckner-Weg 4**
**D-7601 Willstaett(DE)**

(54) **Verfahren zum Polieren der Oberflächen von Magnetspeicherplatten.**

(57) Die Erfindung betrifft ein Verfahren zum Polieren der geschliffenen Oberflächen von Magnetspeicherplatten, bestehend aus einem scheibenförmigen starren Trägermaterial mit darauf beidseitig haftfest aufgebrachten Magnetschichten aus in einem organischen Polymeren und üblichen Zusatzstoffen feinverteilten magnetischen Material durch Andruck von Filzringen oder -scheiben gegen die sich bewegende und auf der Oberfläche mit einer wäßrigen Butylacetat und gegebenenfalls Butandiol-1,4 enthaltenden Emulsion versehenen Magnetspeicherplatte.

EP 0 016 447 A1

BASF Aktiengesellschaft                    O.Z. 0050/033744

Verfahren zum Polieren der Oberflächen von
Magnetspeicherplatten

Die Erfindung betrifft ein Verfahren zum Polieren der geschliffenen Oberflächen von Magnetspeicherplatten, bestehend aus einem scheibenförmigen starren Trägermaterial mit darauf beidseitig haftfest aufgebrachten Magnetschichten aus in einem organischen Polymeren und üblichen Zusatzstoffen feinverteilten magnetischen Material.

Zur Speicherung insbesondere digitaler Informationen werden in großem Umfang Magnetspeicherplatten eingesetzt. Sie werden in bekannter Weise dadurch hergestellt, daß kreisförmige Scheiben aus Aluminium oder Aluminiumlegierung, welche zur Aufnahme geeigneter Halterungs- und Antriebsmittel in der Mitte mit einem konzentrischen Ausschnitt versehen werden, mit einer flüssigen Dispersion, die ein magnetisierbares Material fein verteilt in einem polymeren Bindemittel enthält, überzieht und diesen Überzug anschließend trocknet, bzw. härtet und schleift. Als Beschichtungstechnik hat sich das sogenannte spin coating-Verfahren besonders bewährt, wie es z.B. in der US-Patentschrift 3 198 657 beschrieben ist. Andere bekannte Möglichkeiten zum Auftragen der Magnetschicht beruhen auf einem Eintauchen der Trägerscheibe in die flüssige Überzugsmischung oder auf einem Aufsprühen der Mischung.

Bei der Benutzung solcher magnetischer Aufzeichnungsplatten in Aufzeichnungsgeräten, wie sie z.B. in der US-PS 3 176 281 beschrieben sind, werden die Informationen mittels eines über der rotierenden Magnetschicht schwebenden Schreib/Lese-Kopfes in konzentrischen kreisförmigen Spuren aufgezeichnet. In dem Bemühen die In-
Sob/BL

formationsdichte solcher Speichermedien zu erhöhen, wurde die Dicke der magnetisierbaren Schicht immer wieder verringert. In demselben Maße mußte auch die Flughöhe der Magnetköpfe, mit denen die Information geschrieben und gelesen werden, geringer werden. So wurde z.B. bei allgemein bekannten Geräten die Flughöhe, d.h. der Abstand zwischen schwebendem Magnetkopf und rotierender Platte, von ursprünglich 2,5 µm auf 0,5 µm verringert. Um diese Flughöhe zu erreichen, werden an die Ebenheit der Oberfläche von Magnetspeicherplatten außergewöhnlich hohe Anforderungen gestellt. Sie muß frei von Unregelmäßigkeiten sein, denn während der Rotation der Platte wird durch jeden auch nur geringen Oberflächendefekt ein Axialschlag auf den Magnetkopf ausgeübt, wobei es durch eine solche Erschütterung des Magnetkopfes zu einem Signalfehler oder sogar zu einem head-crash, das Aufschlagen des Magnetkopfes auf die Plattenoberfläche und ein Herausreißen von Schichtteilen aus der Magnetschicht, kommen kann.

Um die erforderliche äußerst niedrige Oberflächenrauhigkeit der Magnetschichten zu erreichen, werden diese, wie beispielsweise in der DE-PS 21 50 993 beschrieben, in besonderer Weise geschliffen. Dazu werden harte Schleifpulver, wie Diamant oder Korund, entweder als Schleifpaste auf einem Trägermaterial oder fixiert auf einem Schleifband verwendet. Diese spanabhebende Bearbeitung der Magnetschichtoberfläche ergibt zwar ein hohes Maß an Ebenheit. Eine derart verbesserte Rauhigkeit reicht jedoch nicht aus, um solche für hohe Informationsdichten geeignete Magnetspeicherplatten zu ergeben. Ursache hierfür ist der bei Schleifverfahren übliche Eingriff des Schleifkorns, wodurch in der Oberfläche jeweils eine kleine Rille mit aufgeworfenen Randzonen entsteht. Diese hochstehenden Kanten verursachen eine Mikrorauhigkeit, welche bereits das Flugverhalten des Magnetkopfes stört.

Um dies zu vermeiden ist eine Mikrorauhigkeit mit einem Rauhtiefenwert $R_z$ (nach DIN 4762) von kleiner 0,30 ,um erforderlich.

Es ist bekannt, daß mit Hilfe eines Poliervorgangs die Mikrorauhigkeit von Oberflächen verbessert werden kann. Üblicherweise wird dazu die geschliffene Oberfläche der einer pigmentierten Lackschicht ähnlichen Magnetschicht mittels einer schnell laufenden Filzscheibe oder -Ring mechanisch bearbeitet. Die dabei entstehende lokale Wärmeentwicklung führt zu einem Verfließen der obersten Lackschicht, so daß das Material praktisch nicht abgetragen, sondern nur verschoben wird. Mit dieser Einebnung von Spitzen und Vertiefungen läßt sich zwar ein hoher Glanzeffekt erreichen, eine für das stabile Fliegen des Magnetkopfs notwendige Mikrorauhigkeit läßt sich jedoch nicht erzielen. Auch bei der Anwendung einer auf dem Gebiet des Metallpolierens bekannten Polierpaste oder Polieremulsion (W. Burkart und K. Schmotz Handbuch für das Schleifen und Polieren, Leuze-Verlag, 1974, Seiten 37-44) läßt sich unter Berücksichtigung der an Magnetplattenspeicher gestellten Anforderungen kein befriedigendes Ergebnis erreichen. Dasselbe gilt bei dem bei Kunststoffen üblichen Polieren an der Stoffscheibe mit Hilfe von Glanzwachsen. Mit den bei anderen Poliermethoden verwendeten Schwabbelscheiben wird zwar eine zufriedenstellende Mikrorauhigkeit erreicht, doch lassen sich im Falle des Polierens von Magnetschichten, Auswaschungen auf der Oberfläche nicht verhindern, wodurch aber dann die Rauhigkeit wieder verschlechtert wird.

Es bestand daher die Aufgabe, ein Verfahren zum Polieren der Oberflächen von geschliffenen Magnetschichten von Magnetspeicherplatten bereitzustellen, welches ohne

0016447

Beeinträchtigung der beim vorangehenden Schleifvorgang erzielten Oberflächenebenheit die Verbesserung der Mikrorauhigkeit gestattet.

Es wurde nun gefunden, daß sich die Oberflächen von geschliffenen Magnetschichten von Magnetspeicherplatten, welche aus einem scheibenförmigen starren Trägermaterial mit darauf beidseitig haftfest aufgebrachten Magnetschichten aus in einem härtbaren organischen Bindemittel und üblichen Zusatzstoffen feinverteilten magnetischem Material bestehen, durch Andruck von Filzringen oder -scheiben gegen die auf der Oberfläche mit einer wäßrigen Emulsion versehenen, sich in beiden Drehrichtungen alternierend bewegenden Magnetspeicherplatten polieren lassen und die gemäß der Aufgabe der Erfindung gestellten Eigenschaften besitzen, wenn der beim Polieren eingesetzten wäßrigen Emulsion 2 bis 25 Gewichtsteile Butylacetat, bezogen auf die Menge an Emulsion, zugesetzt werden.

Für das angegebene Verfahren eignen sich die hierfür üblichen Emulsionen, wie sie zum Reinigen und Entfernen von Schmutzpartikeln beim Polieren angewandt werden und aus 40 bis 90 Gewichtsteilen Wasser und 10 bis 60 Gewichtsteilen an sich bekannter Emulgatoren bestehen. Erfindungsgemäß wird nun einer solchen Emulsion 2 bis 25, vorzugsweise 12 bis 20 Gewichtsteile Butylacetat, bezogen auf die Menge an Emulsion, zugesetzt. Im Rahmen der Erarbeitung des erfindungsgemäßen Verfahrens hat es sich als besonders vorteilhaft herausgestellt, wenn der Emulsion neben den genannten Mengen an Butylacetat noch 1 bis 4 Gewichtsteile an Butandiol-1,4 zugegeben werden.

BASF Aktiengesellschaft — 5 — O.Z. 0050/033744

016447

Als Emulgatoren können verschiedene Substanzen oder Substanzgemische verwendet werden, sie müssen jedoch mit Wasser sowie mit Butylacetat und Butandiol-1,4 mischbar sein. So hat sich für das vorliegende Verfahren ein Gemisch aus mit Natrium- oder Kaliumhydroxid verseiften Fettsäuren bewährt. Zweckmäßigerweise besteht das Gemisch aus 20 % Palmitinsäure, 60 % Linol- und Linolensäure, 13 % Stearinsäure, 4 % Laurinsäure und 3 % Myristinsäure. In gleiche Weise eignen sich Oxäthylierungsprodukte von Alkylphenolen, insbesondere ein Nonylphenol mit 20 Äthoxygruppen.

Zur Durchführung des erfindungsgemäßen Verfahrens wird die beidseitig eine geschliffene Magnetschicht aufweisende Magnetspeicherplatte auf eine angetriebene Spindel gespannt, welche die alternierende Rotation der Scheibe bewerkstelligt. Dann wird die Plattenoberfläche mit der Butylacetat enthaltenden Emulsion befeuchtet und anschließend durch Anpressen von mit Filzringen ausgerüsteten Polierköpfen gegen die rotierende Platte poliert. Während des Vorgangs wird die Emulsion gleichmäßig auf der Oberfläche verteilt, was z.B. mit Hilfe eines an der Plattenoberfläche vorbeigeführten und angedrückten Bandes aus Textilgewebe oder Vliesstoff erfolgen kann. Nach dieser Behandlung wird die Platte mit Wasser abgespült und damit die Emulsion und der darin emulgierte Abrieb entfernt. Zur Trocknung wird die Platte mit niederen Alkoholen abgespült. Im übrigen werden die üblichen bei Polierverfahren bekannten Bedingungen eingehalten.

Durch das erfindungsgemäße Verfahren werden Magnetspeicherplatten erhalten, welche sich bei gegebener geringer Rauhigkeit auf Grund der dabei erzielbaren hervorragenden Mikrorauhigkeit in besonderer Weise zum Einsatz in solchen Magnetspeichergeräten eignen, bei denen wegen der angestrebten hohen Informationsdichte die Magnetköpfe sich in einem Abstand von weniger als 1 um über den rotierenden Magnetschichtoberflächen halten.

Mit dem durch die folgenden Beispiele näher erläuterten erfindungsgemäßen Verfahren lassen sich alle Magnetspeicherplatten, welche ein nach dem Stand der Technik durch Schleifen erreichte niedrige Rauhigkeit $R_z$ von kleiner 0,40 um (gemessen nach DIN 4762 mit einem cut off von 0,8 mm und einer Meßstrecke von 4,8 mm. Nadelradius: 3 um) besitzen, bezüglich ihrer Mikrorauhigkeit entscheidend verbessern.

Magnetspeicherplatten in diesem Sinne bestehen aus dem Trägermaterial, einer aus einer Aluminiumlegierung bestehenden kreisförmigen Scheibe mit einer in der Mitte konzentrisch angeordneten Ausnehmung. Auf diese Scheibe mit ihren geschliffenen und geläppten Oberflächen wird nun die Magnetschicht aufgebracht. Dies geschieht durch Auftragen einer Dispersion eines magnetischen Materials, meist nadelförmiges Gamma-Eisen(III)oxid, mit einer durchschnittlichen Teilchenlänge von 0,1 bis 2 um, in einem härtbaren, organischen Bindemittel. Als Bindemittel, die zweckmäßig in Form ihrer Lösungen bzw. der Lösungen ihrer Komponenten angewandt werden, sind Bindemittel mit reaktiven Epoxygruppen besonders geeignet.

Sehr geeignet sind die Polyglycidyläther von aliphatischen und aromatischen Polyolen, wie Glycerin, 1,4-Butandiol, Tris(hydroxymethyl)-propan-(2,2), Pentaerythrit, Bisphenol A (Bis-(4-hydroxypheny)-propan-(2,2)), Bis-(4-hydroxyphenyl)-methan und ähnliche, die durch Umsetzung der Polyole mit Epichlorhydrin gewonnen werden können und als Lackbindemittel im Handel erhältlich sind. Sie lassen sich z.B. mit Polyaminen, Polyaminoamiden, härtbaren, gegebenenfalls plastifizierten Phenoplasten vom Resoltyp, härtbaren Harnstoff-Formaldehydvorkondensaten oder härtbaren Melamin-Formaldehydvorkondensaten, deren Methylolgruppen auch mit niederen Alkoholen veräthert sein können, bei höheren Temperaturen härten. Natürlich können die Schichten auch die üblichen Zusatzstoffe, z.B. Dispergierhilfsmittel oder Gleitmittel, in den üblichen kleinen Mengen enthalten. Zur Herstellung der Dispersion wird das Gemisch aus magnetischem Material mit dem härtbaren Bindemittel und genügend Lösungsmittel nach einem üblichen Dispergierverfahren, z.B. in einer Kugelmühle, dispergiert. Auch das Auftragen der Dispersion auf die Trägerscheibe kann in bekannter Art erfolgen. Als sehr zweckmäßig hat sich erwiesen, zunächst eine Schicht der Dispersion auf die langsam rotierenden Trägerscheiben, z.B. bei einer Geschwindigkeit von etwa 100 bis 500 U/min, aufzutragen, und danach die gewünschte Schichtstärke durch Rotation der Scheibe bei höherer Geschwindigkeit, bevorzugt bei etwa 1000 bis 3000 U/min, einzustellen. Eine mögliche Auftragstechnik ist in der US-PS 2 913 246 beschrieben. In der üblichen Ausführungsform werden die Trägerplatten beidseitig mit der Magnetschicht versehen. Danach werden in einer ersten Stufe die Dispersionsschichten durch Verdampfen des Lösungsmittels getrocknet und anschließend das Bindemittel bei erhöhter Temperatur ausgehärtet. An den so hergestellten Magnetschichten wird durch Schleifen mit bekannten Bandschleifeinrichtungen oder auch entsprechend der DE-AS 21 50 993 die geforderte Oberflächenebenheit eingestellt.

## Beispiel 1

Zum Polieren einer Magnetspeicherplatte mit einer 1 bis $3 \mu m$ dicken Magnetschicht und einer Ausgangsrauhigkeit von $R_z < 0,4 \mu m$ werden zu 3440 Teilen Wasser zuerst 1160 Teile eines Emulgators, bestehend aus dem mit Natriumhydroxid verseiften Fettsäurengemisch aus 60 Teilen Linol- und Linolensäure, 20 Teilen Palmitinsäure, 13 Teilen Stearinsäure, 4 Teilen Laurinsäure und 3 Teilen Myristinsäure, und dann 680 Teile Butylacetat und 68 Teile Butandiol-1,4 gegeben.

Diese Emulsion wird mit Hilfe einer Dosierpumpe auf die Oberfläche einer auf einer Spindel befestigten und in Drehung versetzten geschliffenen Magnetspeicherplatte in einer Menge von etwa 3 Gramm je Plattenseite aufgetragen.

Zur Verteilung der Flüssigkeit werden auf die sich mit einer Umdrehungszahl von 300 Upm rotierenden Platte rotierende Filzscheiben aufgedrückt. Die Polierscheiben bestehen aus einem Metallring auf den ein 10 mm starker Filzring mit einem Durchmesser von 100 mm fixiert ist. Die Polierzeit beträgt 40 Sekunden. Nach dieser Behandlung wird die Magnetplatte durch Aufsprühen von entsalztem Wasser von $20^{o}C$ abgebürstet, wobei die Polierflüssigkeit von der Oberfläche der Platte abgespült wird. Dann wird die Platte mit aufgesprühtem Propylalkohol getrocknet.

Eine derart polierte Magnetspeicherplatte wird nachfolgend beschriebenen Prüfungen unterzogen. Die Meßergebnisse sind in der Tabelle aufgeführt.

### 1. Abriebtest

Hierbei wird ein mit Propanol getränktes weißes Poliertuch auf die auf einer Spindel aufgespannte und sich um ihre Achse drehende Magnetspeicherplatte gedrückt und dadurch die Oberfläche abgewischt. Die Intensität des auf dem weißen Tuch sichtbaren Abriebs dient zur Beurteilung des Abriebverhaltens der Magnetschicht und wird mit einer Notenskala bewertet. Dabei bedeutet die Note 1 kein Abrieb, d.h. weißes Tuch, und die Note 6 starker Abrieb, d.h. schwarzbrauner Oxidabrieb. Die Zwischenstufen reichen von hellgelb über gelb und gelbbraun bis braun.

### 2. Oberflächenrauhigkeit

Die Rauhigkeit der Magnetschichtoberfläche wird mit Hilfe eines Rauhigkeitsmesser (Perth-o-Meter der Fa. Perthen, Hannover) nach DIN 4762 gemessen. Bestimmt wird jeweils der $R_z$-Wert.

### 3. Flugtest

Das Flugverhalten wird mittels einer üblichen Prüfanordnung gemessen. Die zu untersuchende Magnetplatte rotiert auf einem Prüflaufwerk mit 3 600 Upm. Über der Platte "fliegt" ein mit einem piezoelektrischen Sensor ausgerüsteter Prüfkopf in 0,75 um Höhe, der während der Prüfung in radialer Richtung über die Oberfläche der Platte geschoben wird. Jede Unebenheit der Plattenoberfläche führt zu einer Auslenkung des Prüfkopfes aus seiner stabilen Flugbahn. Die damit verbundenen Beschleunigungen erzeugen elektrische Signale, die über der Prüfstrecke integriert und als Flugkennzahl ausgewiesen werden. Eine strukturfreie Oberfläche hat demgemäß eine niedere Flugkennzahl zur Folge. Eine Flugkennzahl von 1 bedeutet eine Oberfläche mit vernachlässigbarer Mikrorauhigkeit, während eine Flugkennzahl von 4 bei einer unzureichend geschliffenen und polierten Magnetschicht erzielt wird.

4. Grenzgeschwindigkeit

Im Verlaufe des Flugtestes wird die Umdrehungsgeschwindigkeit der Magnetplatte kontinuierlich vermindert. Dadurch verringert sich die Flughöhe des Kopfes soweit, bis es bei der sogenannten Grenzgeschwindigkeit zur Berührung zwischen Kopf und Platte kommt. Je kleiner die in Upm angegebene Grenzgeschwindigkeit ist, desto geringer ist die Mikrorauhigkeit der Magnetschicht.

Beispiel 2

Es wird wie in Beispiel 1 beschrieben verfahren, jedoch setzt sich die Emulsion aus 1040 Teilen Wasser, 1160 Teilen eines Emulgator aus Nonylphenol mit 20 Äthoxygruppen, 340 Teilen Butylacetat und 34 Teilen Butandiol-1,4 zusammen.
Die Meßergebnisse sind in der Tabelle angegeben.

Beispiel 3

Es wird wie in Beispiel 1 beschrieben verfahren, jedoch setzt sich die Emulsion aus 76 Teilen Wasser, 11 Teilen des in Beispiel 1 eingesetzten aus einem verseiften Fettsäuregemisch bestehenden Emulgators und 13 Teilen Butylacetat zusammen.
Die Meßergebnisse sind in der Tabelle aufgeführt.

## Vergleichsversuch 1

Es wird eine geschliffene Magnetspeicherplatte, wie sie in Beispiel 1 zum Polieren eingesetzt wird, lediglich 1 Minute lang mit einem mit Isopropanol getränkten Poliertuch behandelt und dann geprüft. Die Meßergebnisse sind in der Tabelle aufgeführt.

## Vergleichsversuch 2

Es wird wie in Beispiel 1 beschrieben verfahren, jedoch setzt sich die Emulsion nur aus 90 Teilen Wasser und 10 Teilen des in Beispiel 1 eingesetzten Emulgators zusammen.

## Tabelle

| | Beispiel | | | Vergl.-Versuch | |
|---|---|---|---|---|---|
| | 1 | 2 | 3 | 1 | 2 |
| Abriebtest-Note | 1 | 2 | 2 | 4 | 5 |
| Oberflächenrauhigkeit $R_z$ ($\mu$m) | 0,23 | 0,25 | 0,27 | 0,4 | 0,45 |
| Flugkennzahl | 1,0 | 1,2 | 1,3 | 2,25 | 4 |
| Grenzgeschwindigkeit (Upm) | 700 | 800 | 850 | 1400 | 1700 |

## Patentansprüche

1. Verfahren zum Polieren der Oberflächen von geschliffenen Magnetschichten von Magnetspeicherplatten, welche aus einem scheibenförmigen starren Trägermaterial mit darauf beidseitig haftfest aufgebrachten Magnetschichten aus in einem härtbaren organischen Bindemittel und üblichen Zusatzstoffen feinverteilten magnetischen Material bestehen, durch Andruck von Filzringen oder -scheiben gegen die auf der Oberseite mit einer wäßrigen Emulsion versehenen, sich in beiden Drehrichtungen alternierend bewegenden Magnetspeicherplatte, dadurch gekennzeichnet, daß der beim Polieren eingesetzten wäßrigen Emulsion 2 bis 25 Gewichtsteile Butylacetat, bezogen auf die Menge an Emulsion, zugesetzt werden.

2. Verfahren gemäß Anspruch 1, dadurch gekennzeichnet, daß der Emulsion 2 bis 25 Gewichtsteile Butylacetat und 1 bis 4 Gewichtsteile Butandiol-1,4, jeweils bezogen auf die Menge an Emulsion, zugesetzt werden.

CO16447

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A,D | DE - A - 2 150 993 (BASF)<br>* Anspruch 1 *<br><br>-- | 1 |
| A | DE - A - 1 769 959 (SCHMEIER)<br>* Anspruch 1 *<br><br>---- | 1 |

**KLASSIFIKATION DER ANMELDUNG (Int. Cl.)**

G 11 B 5/84
B 24 B 1/00

**RECHERCHIERTE SACHGEBIETE (Int. Cl. 3)**

G 11 B 5/84
C 09 C 1/00
C 09 K 13/06
B 24 B 1/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| | Der vorliegende Recherchenbericht wurde für alle Patentansprüche erstellt. |
|---|---|

| Recherchenort | Abschlußdatum der Recherche | Prüfer |
|---|---|---|
| Den Haag | 20-06-1980 | V.D. BULCKE |

EPA form 1503.1   06.78